# FASCICULE DE BREVET EUROPEEN

(11) **EP 0 750 014 B1**
(45) Date de publication et mention de la délivrance du brevet: **13.05.1998**
(21) Numéro de dépôt: 96401262.9
(22) Date de dépôt: 11.06.1996
(51) Int. Cl.: C08L 27/12, C08L 33/06, C08F 259/08, C09D 127/12, C09D 133/06

(54) **Liant pour peinture et vernis auto-réticulables**
Selbstvernetzbare Lackbindemittel und Lack
Self-crosslinkable paint binder and lacquer

(30) Priorité: 23.06.1995 FR 9507568
(43) Date de publication de la demande: 27.12.1996
(73) Titulaire: ELF ATOCHEM S.A., 92800 Puteaux, Hauts-de-Seine (FR)
(72) Inventeur: Kappler, Patrick, 69130 Ecully (FR); Perillon, Jean-Luc, 26130 St. Paul les trois Châteaux (FR); Savary, Catherine, 27410 Ajou (FR)

(56) Documents cités:
- EP-A- 0 364 316
- EP-A- 0 567 154
- EP-A- 0 572 254
- EP-A- 0 685 499

## Description

La présente invention a pour objet des liants pour peintures et vernis réticulables par simple chauffage, appelés dans tout ce qui suit peintures et vernis auto-réticulables car, pour être réticulés, ces vernis et peintures ne nécessitent ni composés de type isocyanate ni composés de type mélamine/formol. Les liants selon l'invention comprennent un ou plusieurs copolymères fluorés hydroxylés et/ou carboxylés et un ou plusieurs copolymères acryliques époxydés et/ou alcoxylés. Il est connu que les compositions réticulables avec des composés isocyante ou de type mélamine formol et qui sont à base de polymère fluoré possèdent une bonne tenue au vieillissement, une bonne résistance aux solvants ainsi qu'une bonne résistance mécanique, notamment dureté. En outre, leur aptitude à la mise en forme de films d'adhésion est excellente et ce, sur de nombreux substrats. Mais ces agents de réticulation sont des composés en général toxiques nécessitant des précautions lors de leur manipulation, et les compositions réticulées résultantes souffrent d'une certaine rigidité. Dans le cas de compositions réticulées à l'aide de composés isocyanates, des isocyanates libres qui n'auraient pas réagi avec le polymère fluoré hydroxylé peuvent migrer librement limitant ainsi le domaine d'utilisation de ces compositions. Les films de revêtement à base des compositions selon l'invention présentent l'avantage supplémentaire d'être auto-adhérents c'est-à-dire de ne pas nécessiter de primaire d'adhésion et d'être de très bonne souplesse.

Dans EP 572.254 au nom de NIPPON PAINT, sont décrites des compositions auto-réticulables comprenant un copolymère d'oléfines fluorées porteur de groupements hydroxyles ou acides, un copolymère acrylique porteur de groupements esters et acides ainsi qu'un copolymère acrylique porteur de groupements hydroxyles ou époxydes. Mais, ces compositions, assez pauvres en fluor, résistent mal au vieillissement.

EP 567.154 au nom de ASAHI GLASS décrit des compositions auto-réticulables comprenant un copolymère fluoré porteur de groupements hydroxyles et époxydes associé à divers réticulants porteurs de groupements acides ou anhydrides d'acide tels que l'anhydride d'acide méthylhexahydrophtalique ou des copolymères fluoré ou acrylique porteurs de groupements acides. Malheureusement, les copolymères fluorés porteurs de groupements hydroxyles et époxydes de ces compositions sont particulièrement instables au stockage, même à température ambiante.

Les copolymères fluorés hydroxylés et/ou carboxylés selon l'invention sont à base des monomères suivants :
①. de 45 à 85 % (molaire), et de préférence de 60 à 70 %, de fluorure de vinylidène (VF2) et/ou de trifluoroéthylène (VF3),
②. de 15 à 55 % (molaire), et de préférence de 30 à 40 %, de tétrafluoroéthylène (C₂F₄)
③. de 5 à 25 moles pour 100 moles de monomères 1+2, et de préférence de 60 à 70 %, d'un ou plusieurs monomères allyliques choisis parmi les éthers allyliques hydroxylés et/ou les esters allyliques carboxylés tels que
   CH₂=CH-CH₂-O-(CH₂)ₙ-OH avec 2≤n≤4
   CH₂=CH-CH₂-(O-CH₂-CH₂)ₙ-OH avec 1≤n≤4
   CH₂=CH-CH₂-(O-CH₂-CH(CH₃))ₙ-OH avec 1≤n≤4
   CH₂=CH-CH₂-O-CH₂-CHOH-CH₂OH
   CH₂=CH-CH₂-O-CH₂-CH-(CH₂-CH₃)-(CH₂OH)₂
   CH₂=CH-CH₂-O-CO-C₆H₁₀-COOH
   CH₂=CH-CH₂-O-CO-C₂H₄-COOH
   CH₂=CH-CH₂-O-CH₂-CH₂-O-CO-C₆H₁₀-COOH,
   et de préférence pour 100 moles de monomères ①+② de 10 à 25 moles d'esters allyliques carboxylés et 0 à 10 moles d'éthers allyliques hydroxylés,
④. de 0 à 20 moles pour 100 moles de ①+② monomères d'un ou plusieurs monomères choisis parmi les éthers vinyliques non hydroxylés, tels que le butylvinyléther,
⑤. de 0 à 5 moles pour 100 moles de ①+② monomères d'un ou plusieurs d'autres monomères (méth)acrylates fluorés choisis parmi le (méth)acrylate de trifluoroéthylène et les (méth)acrylates porteurs d'au moins un groupement CF₃-(CF₂)ₘ tels que :
   CH₂=CH-CO-O-C₂H₄-C₆F₁₃
   CH₂=CH-CO-O-C₂H₄-C₈F₁₇.

Certains de ces copolymères fluorés sont notamment décrits dans les demandes de brevet EP 396.444, EP 433.106 et EP 481.849 au nom de la demanderesse.

Le ou les copolymères acryliques selon l'invention sont à base des monomères suivants :
* de 50 à 90 % (massique) d'un ou plusieurs (méth)acrylate(s) d'alkyle, tels que le méthacrylate de méthyle (MAM), l'acrylate de butyle (ABu), les (méth)acrylates d'éthyle,
* et de 10 à 50 % (massique), et de préférence de 20 à 40 %, d'un ou plusieurs monomères (méth)acrylates d'alkyle fonctionnalisés ou substitués par des groupements alcoxy et/ou époxy, tels que le (méth)acrylate de glycidyle (MAGLY), l'isobutoxyméthylacrylamide (IBMA), le méthacrylate de méthoxyéthyle (MAEE), le méthacrylate de méthoxyméthyle (MAME), les (méth)acrylates de l'époxydicyclopentadiène :

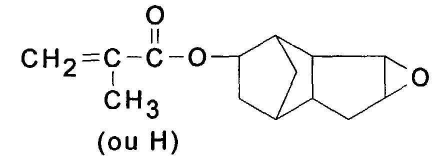

Les liants se présentant le plus souvent sous forme de solutions organiques, on préfère synthétiser les copolymères fluorés ainsi que les copolymères acryliques directement en solution dans le solvant qui sera celui utilisé pour la peinture et/ou le vernis. Les solvants des liants sont en général des solvants organiques de type ester ou cétone. D'une manière générale, on préfère mettre en oeuvre des solvants dont la température d'ébullition est supérieure à 100°C. Parmi les solvants préférés, on peut citer le tertiobutanol, les acétates de méthyle, isopropyle, butyle, la méthylisobutylcétone.

Les copolymères fluorés peuvent être polymérisés en solution notamment dans le tertiobutanol, l'acétate de méthyle ou l'acétate d'isopropyle (voir par exemple EP 396.444, EP 433.106 et EP 481.849 au nom de la demanderesse). Après chargement du solvant organique dans le réacteur de polymérisation, on introduit le(s) monomère(s) allylique(s) hydroxylé(s) et/ou carboxylé(s) puis VF2 et/ou VF3 et C₂F₄. Après avoir porté la température entre 50 et 70 °C, on ajoute l'initiateur de polymérisation, de préférence choisi parmi le perdicarbonate d'isopropyle ou le perpivalate de tertiobutyle. En cours de polymérisation et afin de maintenir les proportions des divers monomères dans des rapports constants, on ajoute VF2 et/ou VF3 et C₂F₄ et le(s) monomère(s) allylique(s) en prenant soin de maintenir la pression constante. Lorsque tous les monomères ont été introduits, on abaisse la température et dégaze le réacteur en évacuant les monomères fluorés qui n'ont pas réagi. Il est parfois nécessaire de procéder à un transfert de solvant afin de disposer du copolymère fluoré dans le solvant souhaité.

On peut mélanger la solution de copolymère(s) fluoré(s), obtenue par exemple selon le procédé exposé ci-dessus, avec le ou les copolymères acryliques déjà synthétisés, ou bien copolymériser les monomères acryliques (i-e les monomères dont dérivent le ou les copolymères acryliques) directement dans le solvant organique en présence de copolymère(s) fluoré(s).

La copolymérisation des copolymères acryliques au sein de la solution de copolymère(s) fluoré(s) hydroxylé(s) et/ou carboxylé(s) peut être réalisée en ajoutant la totalité ou une fraction des monomères acryliques qui est introduite soit en continu soit par incréments successifs en cours de polymérisation. La température de polymérisation est en général comprise entre 40 et 90 °C. On peut utiliser des agents de transfert de type mercaptan pour réduire les masses moléculaires et des initiateurs radicalaires organosolubles en général choisis parmi les initiateurs de type azoïque, les peroxydicarbonates, les perpivalates et les peroxydes de diacyle. A titre d'exemple, on peut citer l'azobisisobutyronitrile, le perdicarbonate de cyclohexyle, le perpivalate de tertiobutyle.

Les copolymères acryliques fonctionnalisés selon l'invention peuvent être synthétisés selon les procédés habituellement mis en oeuvre pour les copolymères acryliques : polymérisation radicalaire en solution, émulsion ou suspension. La température de polymérisation est en général comprise entre 40 et 95 °C. Les initiateurs radicalaires préférés peuvent être choisis parmi les initiateurs de type azoïque, les percarbonates, les perpivalates et les peroxydes de diacyle. Afin de réduire les masses moléculaires des copolymères acryliques, on peut utiliser des agents de transfert de type mercaptan.

Si les copolymères acryliques sont préparés par polymérisation en émulsion ou en suspension, ils se présentent sous forme de poudre après séchage et on peut les dissoudre dans le solvant de son choix.

La quantité en poids de copolymère(s) fluorés au sein du mélange copolymère(s) fluoré(s) + copolymère(s) acrylique(s) est en général comprise entre 0,5 et 0,85. Les liants selon l'invention peuvent être obtenus par simple mélange de solutions contenant respectivement les copolymères fluorés et les copolymères acryliques décrits ci-dessus ou par mélange de la solution de copolymères fluorés et des copolymères en poudre. Les liants peuvent également se présenter sous forme de dispersions aqueuses obtenues à partir des solutions organiques précédentes que l'on disperse une solution aqueuse d'agent(s) émulsifiant(s) avant d'éliminer le solvant organique soit simultanément par distillation, soit après la dispersion.

La dispersion des copolymères peut être mise en oeuvre à l'aide de disperseurs ou d'homogénéiseurs capables de dissiper beaucoup d'énergie mécanique dans les mélanges de liquides immiscibles. Ces appareils permettent de réaliser des émulsions de type "huile dans eau" grâce à l'ajout d'agent(s) émulsifiant(s) approprié(s). Le mélange solution aqueuse/solution de copolymères est soumis à un cisaillement intense par un système d'agitation mécanique ou bien par passage sous pression à travers des buses. En général, l'étape de dispersion peut être mise en oeuvre dans une gamme de température comprise entre 0 et 100 °C, et de préférence entre 15 et 50 °C.

La présente invention a également pour objet les vernis et peintures contentant les liants décrits ci-dessus. Outre les liants, les vernis et peintures peuvent contenir un ou plusieurs pigments qui peuvent être de type minéral ou organique. A titre d'exemple de pigments minéraux, on peut citer le dioxyde de titane, les oxydes de fer, de chrome, les oxydes mixtes de cobalt et d'aluminium, le noir de carbone, l'orangé de molybdate, les pigments inhibiteurs de corrosion tels que le phosphate de zinc, les pigments métalliques tels que l'aluminium.

On peut également ajouter à la peinture et/ou au vernis tout adjuvant ou additif habituel des vernis et peintures tel que agents dispersants, agents épaississants de type associatif ou non, agents destinés à favoriser l'étalement, agents modifiants la rhéologie, agents stabilisants à la chaleur et/ou aux UV, anti-oxydants, agents anti-mousses, agents mouillants des pigments et/ou des supports, fongicides, bactéricides, antigels, catalyseurs de la réaction de durcissement de la peinture, etc ainsi que des charges.

Afin de limiter soit la température de chauffage nécessaire à la réticulation des liants selon l'invention soit le temps de séjour dans le four, on préfère ajouter un catalyseur choisi en général parmi les acides de Lewis. A titre d'exemple, on peut citer l'acide sulfurique, l'acide méthanesulfonique, l'acide paratoluènesulfonique, le trifluorure de bore, le chlorure ferrique, le chorure d'étain, certains titanates.

La peinture et le vernis sont préparés de façon connue en soi par mélange des différents constituants.

Les peintures selon l'invention peuvent être appliquées sur les substrats à revêtir selon toute technique connue telle que pistolet pneumatique, électrostatique, brosse, rouleau, au rideau, au trempé ou par électrodéposition.

Les substrats à revêtir peuvent être des métaux (acier, acier galvanisé, aluminium, etc ....), les matières plastiques telles que le PVC, les polyesters, les résines phénoliques, le verre, les matières céramiques, le bois, le béton, lesdits substrats pouvant être revêtus ou non de primaire et/ou subir un traitement de surface destiné à favoriser l'adhésion de la peinture, etc ...

Dans tous les exemples, les extraits secs (ES) sont exprimés en % en poids.

### Synthèse des copolymères fluorés selon F1 à F4

Dans un réacteur de 30 l muni d'une agitation, d'une régulation de température, on introduit après déaération 18 l d'acétate de méthyle, 1.954 g de VF2, 763 g de C₂F₄, 108 g d'allyloxypropanediol. Après une montée en température jusqu'à 70 °C, la pression au sein du réacteur étant alors de 13 bars, on ajoute 90 g de perpivalate de tertiobutyle. La pression de 13 bars est maintenue constante par l'introduction d'un mélange de VF2 et de C₂F₄ de composition molaire 65/35.

Après chaque introduction de 177 g de ce mélange, on introduit 41,4 g de l'allyloxypropanediol et 9,6 g d'hexahydrophtalate de monoallyle. On introduit de cette façon 4074 g de mélange VF2/C₂F₄ 65/35 molaire, 869 g allyloxypropanediol et 202 g d'hexahydrophtalate de monoallyle.

Toutes les heures, on introduit 27 g de perpivalate de tertiobutyle. La polymérisation dure 5h45.

Le monomère résiduaire est dégazé. L'extrait sec de la solution de copolymère est de 25,6 %. La composition molaire du copolymère F1 est indiquée dans le tableau 1.

Les copolymères F2 à F4 sont préparés selon le même procédé et leurs compositions molaires sont répertoriées dans le tableau 1.

**TABLEAU 1**

| Copolymère N° | COMPOSITION MOLAIRE | | | | | ES % |
|---|---|---|---|---|---|---|
| | VF2 | C₂F₄ | allyloxypropanediol | hexahydrophtalate de monoallyle | MATRIFE | |
| F1 | 65 | 38 | 7,2 | 1,6 | - | 25,6 |
| F2 | 65 | 35 | 7,4 | 2,3 | - | 25,- |
| F3 | 65 | 35 | - | 8,3 | - | 29,3 |
| F4 | 65 | 65 | 11,3 | - | 0,15 | 26,- |

### Synthèse d'un copolymère fluoré F5 porteur de groupements hydroxyles et époxydes (cf EP567.154)

Selon le mode opératoire décrit ci-dessus et en présence de 2 g de K₂CO₃, on synthétise un copolymère fluoré porteur de groupements hydroxyles et époxydes à partir des monomères suivants :
VF2/C₂F₄/allylglycidyléther/allyloxyéthanol.

Le taux de groupements hydroxyles de F5 est égal à 1,8 meq/g et son taux de groupements époxydes est égal à 1,5 meq/g.

L'extrait sec de la solution de copolymère dans l'acétate de butyle est de 59,4 %.

### Synthèse des copolymères acryliques ACi

### AC1 : copolymère acrylique MAM/ABU/IBMA

Dans un réacteur de 1 l muni d'une double enveloppe, d'un réfrigérant, d'une ampoule de coulée et d'une agitation, on introduit 350 g d'acétate de méthyle et 2,5 g de perdicarbonate de cyclohexyle.

Après désaération, la température est portée à 50 °C et un mélange constitué de 60 g de méthacrylate de méthyle (MAM), 60 g d'acrylate de butyle (ABu) et de 30 g d'isobutoxyméthylacrylamide (IBMA) est coulé dans le réacteur en 2 heures. La polymérisation est poursuivie pendant 2 heures supplémentaires puis le réacteur est refroidi. L'extrait sec du copolymère formé dans l'acétate de méthyle est de 30 %. La composition pondérale du copolymère acrylique est MAM/ABu/IBMA 40/40/20.

### AC2 : copolymère acrylique MAM/ABu/MAGLY

Dans un réacteur de 1 l muni d'une double enveloppe, d'un réfrigérant, d'une ampoule de coulée et d'une agitation, on introduit 350 g d'acétate de méthyle et 2,5 g de perdicarbonate de cyclohexyle. Après désaération, la température est portée à 50 °C et un mélange constitué de 60 g de méthacrylate de méthyle, 60 g d'acrylate de butyle, 25 g de méthacrylate de glycidyle (MAGLY) est introduit dans le réacteur régulièrement en 1 heure. La polymérisation est poursuivie pendant 3 heures à 50° C, puis le réacteur est refroidi.

L'extrait du copolymère formé dans l'acétate de méthyle est de 28 %. La composition pondérale du copolymère acrylique AC2 est MAM/ABu/MAGLY 41/41/18.

### AC3 : copolymère acrylique MAM/BMA/HEMA/AMA

Dans un réacteur de 1 l muni d'une double enveloppe, d'un réfrigérant, d'une ampoule de coulée et d'une agitation, on introduit 450 g d'acétate de butyle et 2,5 g de perdicarbonate de cyclohexyle. Après désaération, la température est portée à 60°C et un mélange constitué de 45 g de méthacrylate de méthyle, 37,5 g de méthacrylate de n-butyle (BMA), 42 g de méthacrylate d'hydroxy-2 éthyl (HEMA) et 25,5 g d'acide méthacrylique (AMA) est introduit dans le réacteur régulièrement en 1 heure. La polymérisation est poursuivie pendant 4 heures à 60°C, puis le réacteur est refroidi.

Le copolymère formé précipite dans l'acétate de butyle. La composition pondérale du copolymère acrylique AC3 est MAM/BMA/HEMA/AMA 30/25/28/17.

### EXEMPLES 1 A 3 Compositions auto-réticulables

Les compositions auto-réticulables sont constituées par simple mélange d'un copolymère fluoré Fi et d'un copolymère acrylique ACj

### Exemple 1

Mélange de 586 g de la solution du copolymère F1 dans l'acétate de méthyle et de 225g de la solution du copolymère acrylique AC1 dans l'acétate de méthyle (ES = 25 %)

### Exemple 2

Mélange de 600 g de la solution de copolymère F2 dans l'acétate de méthyle et de 225g de la solution du copolymère acrylique AC2 dans l'acétate de méthyle (ES = 25 %).

### Exemple 3 comparatif selon EP 567.154

Au moment de mélanger F5 et AC₃, F5 stocké pendant 2 mois dans un flacon fermé placé dans un local clos sous lumière artificielle à une température de 20 ±2 °C présentait une couleur marron et avait polymérisé.

### Fabrication de vernis auto-réticulables sans isocyanate ou mélamine formol à partir des compositions précédentes

Les compositions précédentes ont été mises en forme de vernis par ajout de 0,2 % en poids d'acide paratoluènesulfonique par rapport au poids total du copolymère fluoré et du copolymère acrylique.

### Fabrication de vernis réticulables par des résines contenant des groupements isocyanates ou mélamine formol

A titre comparatif, ont été réalisés des vernis à partir de solution de copolymère F1 sans copolymère acrylique et contenant un agent de réticulation avec des groupements isocyanates (F1 réticulé NCO) ou constitué d'une résine mélamine/formol (F1 réticulé MF). A titre comparatif, un vernis a été préparé à partir de LUMIFLON® LF 200 de la Société ASAHI GLASS et d'un agent de réticulation contenant des groupements isocyanates (Lumiflon réticulé NCO). Ces 3 vernis ont été réticulés à 80 °C pendant 30 min.

### Revêtement de substrats avec les vernis

Un film de vernis est déposé à l'aide d'un raclet spirale sur une plaque en aluminium chromaté dépourvue de primaire d'adhérence.

Après évaporation de l'acétate de méthyle, le vernis est passé au four pendant 30 min à 150° C. L'épaisseur du film sec est de 20 µm.

48 h après l'application, le vernis est examiné selon les critères suivants :
- brillance
- dureté
- choc
- adhérence
- pli
- AR MEK

Le brillant spéculaire à 20° mesuré selon la norme ASTM D 523-85.

La dureté Persoz est mesurée selon la norme NFT 30-016 est de 230 s.

Le choc est exprimé en cm pour un poids de 1 kg.

L'adhérence est mesurée selon la norme NFT 30-038. La valeur "0" correspond à la note maximale.

La résistance au pliage est mesurée selon la norme ISO 3270. La valeur "0" correspond à la note maximale.

Pour juger du degré de réticulation du film, on le soumet à une série de frottements avec un coton imbibé de méthyl éthyl cétone jusqu'à apparition du support. Un nombre d'aller-retours (AR MEK) inférieur à 50 traduit une mauvaise réticulation, un nombre supérieur à 100 traduit une excellente réticulation.

L'ensemble des résultats est réuni dans le tableau 2 ci-dessous :

**TABLEAU 2**

| Test | VERNIS | | COMPARATIF | | |
|---|---|---|---|---|---|
| | EX1 | EX2 | F1 réticulé NCO | F1 réticulé MF | Lumiflon réticulé NCO |
| Brillance 20° | 600 | 70 | 100 | 60 | 65 |
| Dureté (s) | 266 | 300 | 300 | 330 | 250 |
| Choc (cm/kg) | >100 | >100 | 60 | 47,5 | 67,5 |
| Adhérence | 0 | 0 | 3 | 5 | 5 |
| Pli (T) | 0 | 0 | 1 | 2 | 1 |
| AR MEK | >200 | >200 | >200 | >200 | >200 |

### Fabrication de peintures auto-réticulables sans isocyanate ou mélamine formol à partir des compositions précédentes

A 400 g de copolymère F1, on ajoute 71,2g de TiO₂ (pigment blanc) et on broie l'ensemble dans un broyeur à billes de verre pendant 45 min à 1500 trs/min. On ajoute ensuite 0,2 % en poids d'acide paratoluènesulfonique par rapport au poids total du copolymère fluoré et du copolymère acrylique.

## Revendications

1. Liant pour peintures et vernis auto-réticulables en phase organique ou en dispersion aqueuse comprenant un ou plusieurs copolymères fluorés hydroxylés et/ou carboxylés et d'un ou plusieurs copolymères acryliques époxydés et/ou alcoxylés caractérisé en ce que les copolymères fluorés sont à base des monomères suivants :
①. de 45 à 85 % (molaire) de fluorure de vinylidène (VF2) et/ou de trifluoroéthylène (VF₃),
②. de 15 à 55 % (molaire) de tétrafluoroéthylène (C₂F₄)
③. de 5 à 20 moles pour 100 moles de monomères ①+② d'un ou plusieurs monomères allyliques choisis parmi les éthers allyliques hydroxylés et/ou les esters allyliques carboxylés tels que
CH₂=CH-CH₂-O-(CH₂)ₙ-OH avec 2≤n≤4
CH₂=CH-CH₂-(O-CH₂-CH₂)ₙ-OH avec 1≤n≤4
CH₂=CH-CH₂-(O-CH₂-CH(CH₃))ₙ-OH avec 1≤n≤4
CH₂=CH-CH₂-O-CH₂-CHOH-CH₂OH
CH₂=CH-CH₂-O-CH₂-CH-(CH₂-CH₃)-(CH₂OH)₂
CH₂=CH-CH₂-O-CO-C₆H₁₀-COOH
CH₂=CH-CH₂-O-CO-C₂H₄-COOH
CH₂=CH-CH₂-O-CH₂-CH₂-O-CO-C₆H₁₀-COOH,
④. de 0 à 20 moles pour 100 moles de monomères ①+② d'un ou plusieurs monomères choisis parmi les éthers vinyliques non hydroxylés, tels que le butylvinyléther,
⑤. de 0 à 5 moles pour 100 moles de monomères ①+② d'un ou plusieurs d'autres monomères (méth)acrylates fluorés choisis parmi le (méth)acrylate de trifluoroéthylène et les (méth)acrylates porteurs d'au moins un groupement CF₃-(CF₂)ₘ tels que :
CH₂=CH-CO-O-C₂H₄-C₆F₁₃
CH₂=CH-CO-O-C₂H₄-C₈F₁₇.
et les copolymères acryliques sont à base des monomères suivants :
* de 50 à 90 % (massique) d'un ou plusieurs (méth)acrylate(s) d'alkyle, tels que le méthacrylate de méthyle (MAM), l'acrylate de butyle (ABu), les (méth)acrylates d'éthyle,
* et de 10 à 50 % (massique), et de préférence de 20 à 40 %, d'un ou plusieurs monomères (méth)acrylates d'alkyle fonctionnalisés ou substitués par des groupements alcoxy et/ou époxy, tels que le (méth)acrylate de glycidyle (MAGLY), l'isobutoxyméthylacrylamide (IBMA), le méthacrylate de méthoxyéthyle (MAEE), le méthacrylate de méthoxyméthyle (MAME), les (méth)acrylates de l'époxydicyclopentadiène:

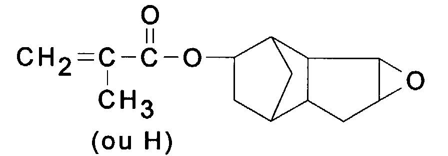

2. Liant selon la revendication 1, caractérisé en ce que le ou les copolymères fluorés sont à base :
- de 60 à 70 % (molaire) de monomères ①,
- de 30 à 40 % (molaire) de monomères ②,
- de 10 à 25 moles d'esters allyliques carboxylés ③ et de 0 à 10 moles d'éthers allyliques hydroxylés ③ pour 100 moles de monomères ①+②,
- de 0 à 20 moles de monomères ④ pour 100 moles de monomères ①+②,
- de 0 à 5 moles de monomères ⑤ pour 100 moles de monomères ①+②.

3. Liant selon la revendication 1 ou 2, caractérisé en ce que le ou les copolymères fluorés sont à base de VF2, C₂F_{4,} CH₂=CH-CH₂-O-CH₂-CH₂-O-CO-C₆H₁₀-COOH et éventuellement CH₂=CH-CH₂-O-CH₂-CHOH-CH₂OH.

4. Liant selon l'une des revendications 1 à 3, caractérisé en ce que le ou les copolymères acryliques sont à base de MAM, d'acrylate de butyle et/ou d'éthyle, de (méth)acrylate de glycidyle et/ou d'isobutoxyméthylacrylamide.

5. Procédé de préparation des liants des revendications 1 à 4, caractérisé en ce qu'on mélange le ou les copolymère(s) fluoré(s) en solution dans un solvant organique avec le ou les copolymère(s) acrylique(s) en solution dans un solvant organique ou en poudre.

6. Procédé de préparation des liants des revendications 1 à 4, caractérisé en ce qu'on copolymérise les monomères acryliques en présence du ou des copolymère(s) fluoré(s) en solution ou en émulsion dans un solvant organique.

7. Vernis et peintures auto-réticulables en phase organique ou aqueuse mettant en oeuvre les liants des revendications 1 à 4.

8. Substrats revêtus avec un vernis ou une peinture auto-réticulable tels que définis à la revendication 7.

## Patentansprüche

1. Bindemittel für selbstvernetzbare Farben und Lacke in organischer Phase oder in wäßriger Dispersion, enthaltend ein oder mehrere carboxylierte und/oder hydroxylierte Fluorcopolymere und ein oder mehrere alkoxylierte und/oder epoxydierte Acrylcopolymere, dadurch gekennzeichnet, daß die Fluorcopolymere auf Basis der folgenden Monomere vorliegen:
(1) 45 bis 85 Mol-% Vinylidenfluorid (VF2) und/oder Trifluorethylen (VF3),
(2) 15 bis 55 Mol-% Tetrafluorethylen (C₂F₄),
(3) 5 bis 20 mol auf 100 mol der Monomere (1) + (2) eines oder mehrerer Allylmonomere, ausgewählt aus hydroxylierten Allylethern und/oder carboxylierten Allylestern wie
CH₂=CH-CH₂-O-(CH₂)ₙ-OH mit 2 ≤ n ≤ 4
CH₂=CH-CH₂-(O-CH₂-CH₂)ₙ-OH mit 1 ≤ n ≤ 4
CH₂=CH-CH₂-(O-CH₂-CH(CH₃))ₙ-OH mit 1 ≤ n ≤ 4
CH₂=CH-CH₂-O-CH₂-CHOH-CH₂OH
CH₂=CH-CH₂-O-CH₂-CH-(CH2-CH3)-(CH₂OH)₂
CH₂=CH-CH₂-O-CO-C₆H₁₀-COOH
CH₂=CH-CH₂-O-CO-C₂H₄-COOH
CH₂ =CH-CH₂-O-CH₂-CH₂-O-CO-C₆H₁₀-COOH,
(4) 0 bis 20 mol, bezogen auf 100 mol der Monomere (1) + (2), eines oder mehrerer Monomere, ausgewählt aus nichthydroxylierten Vinylethern wie Butylvinylether,
(5) 0 bis 5 mol, bezogen auf 100 mol der Monomere (1) + (2), eines oder mehrerer weiterer fluorierter (Meth-)Acrylatmonomere, ausgewählt aus Trifluorethylen(meth-)acrylat und (Meth-)Acrylate mit mindestens einer Gruppe CF₃-(CF₂)ₘ wie
CH₂=CH-CO-O-C₂H₄-C₆F₁₃
CH₂=CH-CO-O-C₂H₄-C₈F₁₇;
und daß die Acrylcopolymere auf Basis der folgenden Monomere vorliegen:
• 50 bis 90 Masse-% eines oder mehrerer Alkyl(meth-)acrylate wie Methylmethacrylat (MMA), Butylacrylat (BuA) und Ethyl(meth-)acrylat;
• 10 bis 50 Masse-%, vorzugsweise 20 bis 40 Masse-%, eines oder mehrerer Alkyl(meth-)acrylate, die funktionalisiert oder substituiert sind mit Alkoxy- und/oder Epoxygruppen, wie z.B. Glycidyl(meth-)acrylat (GLYMA), Isobutoxymethylacrylamid (IBMA), Methoxyethylmethacrylat (MEMA), Methoxymethylmethacrylat (MMMA) sowie Epoxydicyclopentadien(meth-)acrylate:

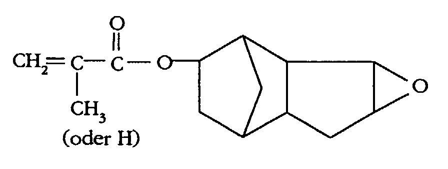

2. Bindemittel nach Anspruch 1, dadurch gekennzeichnet, daß das oder die Fluorcopolymere auf Basis von
- 60 bis 70 Mol-% der Momomere (1),
- 30 bis 40 Mol-% der Momomere (2),
- 10 bis 25 mol carboxylierter Allylester (3) und 0 bis 10 mol hydroxylierter Allylether (3), bezogen auf 100 mol der Monomere (1) + (2),
- 0 bis 20 mol der Monomere (4), bezogen auf 100 mol der Monomere (1) + (2),
- 0 bis 5 mol der Monomere (5), bezogen auf 100 mol der Monomere (1) + (2),
vorliegen.

3. Bindemittel nach Anspruch 1 oder 2, dadurch gekennzeichnet, daß das oder die Fluorcopolymere auf Basis von VF2, C₂F₄,
CH₂=CH-CH₂-O-CH₂-CH₂O-CO-C₆H₁₀-COOH und gegebenenfalls
CH₂=CH-CH₂-O-CH₂-CHOH-CH₂OH vorliegt.

4. Bindemittel nach einem der Ansprüche 1 bis 3, dadurch gekennzeichnet, daß das oder die Acrylpolymere auf Basis von MMA, Butylacrylat und/oder Ethylacrylat, Glycidyl(meth-)acrylat und/oder Isobutoxymethylacrylamid vorliegen.

5. Verfahren zur Herstellung von Bindemitteln nach den Ansprüchen 1 bis 4, dadurch gekennzeichnet, daß man das oder die Fluorcopolymere in Lösung in einem organischen Lösungsmittel mit dem oder den Acrylcopolymeren in Lösung in einem organischen Lösungsmittel oder als Pulver mischt.

6. Verfahren zur Herstellung von Bindemitteln nach den Ansprüchen 1 bis 4, dadurch gekennzeichnet, daß man die Acrylmonomere in Gegenwart des oder der Fluorcopolymeren in Lösung oder in Emulsion in einem organischen Lösungsmittel copolymerisiert.

7. Selbstvernetzende Lacke und Farben in organischer oder wäßriger Phase, enthaltend die Bindemittel nach den Ansprüchen 1 bis 4.

8. Substrate, beschichtet mit einem selbstvernetzbaren Lack oder einer selbstvernetzbaren Farbe gemäß Anspruch 7.

## Claims

1. Binder for self-crosslinkable paints and varnishes in organic phase or in aqueous dispersion, including one or several hydroxylated and/or carboxylated fluorine-containing copolymers and one or several epoxidized and/or alkoxylated acrylic polymers, characterized in that the fluorine-containing copolymers are based on the following monomers:
1 - from 45 to 85 % (molar) of vinylidene fluoride (VF2) and/or of trifluoroethylene (VF3),
2 - from 15 to 55 % (molar) of tetrafluoroethylene (C₂F₄),
3 - from 5 to 20 moles per 100 moles of monomers 1 + 2 of one or several allyl monomers chosen from hydroxylated allyl ethers and/or carboxylated allyl esters such as
CH₂=CH-CH₂-O-(CH₂)ₙ-OH with 2≤n≤4
CH₂=CH-CH₂- (O-CH₂-CH₂)ₙ-OH with 1≤n≤4
CH₂=CH-CH₂(O-CH₂-CH(CH₃))ₙ-OH with 1≤n≤4
CH₂=CH-CH₂-O-CH₂-CHOH-CH₂OH
CH₂=CH-CH₂-O-CH₂-CH-(CH₂-CH₃)-(CH₂OH)₂
CH₂=CH-CH₂-O-CO-C₆H₁₀-COOH
CH₂=CH-CH₂-O-CO-C₂H₄-COOH
CH₂=CH-CH₂-O-CH₂-CH₂-O-CO-C₆H₁₀-COOH,
4 - from 0 to 20 moles per 100 moles of monomers 1 + 2 of one or several monomers chosen from nonhydroxylated vinyl ethers, such as butyl vinyl ether,
5 - from 0 to 5 moles per 100 moles of monomers 1 + 2 of one or several other fluorine-containing (meth)acrylate monomers chosen from trifluoroethylene (meth)acrylate and (meth)acrylates carrying at least one CF₃-(CF₂)ₘ group, such as:
CH₂=CH-CO-O-C₂H₄-C₆F₁₃
CH₂=CH-CO-O-C₂H₄-C₈F₁₇,
and the acrylic copolymers are based on the following monomers:
- from 50 to 90 % (mass) of one or several alkyl (meth)acrylate(s), such as methyl methacrylate (MMA), butyl acrylate (BuA) and ethyl (meth)acrylates,
- and from 10 to 50 % (mass) and preferably from 20 to 40 %, of one or several alkyl (meth)acrylate monomers which are functionalized or substituted by alkoxy and/or epoxy groups, such as glycidyl (meth)acrylate (GLYMA), isobutoxymethylacrylamide (IBMA), methoxyethyl methacrylate (EEMA), methoxymethyl methacrylate (MEMA) and epoxydicyclopentadiene (meth)acrylates:

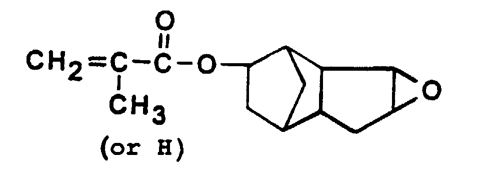

2. Binder according to Claim 1, characterized in that the fluorine-containing copolymer(s) are based:
- on 60 to 70 % (molar) of monomers 1,
- on 30 to 40 % (molar) of monomers 2,
- on 10 to 25 moles of carboxylated allyl esters 3 and on 0 to 10 moles of hydroxylated allyl ethers 3 per 100 moles of monomers 1 + 2,
- on 0 to 20 moles of monomers 4 per 100 moles of monomers 1 + 2,
- on 0 to 5 moles of monomers 5 per 100 moles of monomers 1 + 2.

3. Binder according to Claim 1 or 2, characterized in that the fluorine-containing copolymer(s) are based on VF2, C₂F₄, CH₂=CH-CH₂-O-CH₂-CH₂-O-CO-C₆H₁₀-COOH and optionally CH₂=CH-CH₂-O-CH₂-CHOH-CH₂OH.

4. Binder according to one of Claims 1 to 3, characterized in that the acrylic copolymer(s) are based on MMA, butyl and/or ethyl acrylate, glycidyl (meth)acrylate and/or isobutoxymethacrylamide.

5. Process for preparation of the binders of Claims 1 to 4, characterized in that the fluorine-containing copolymer(s) is (are) mixed in solution in an organic solvent with the acrylic copolymer(s) in solution in an organic solvent or as powder.

6. Process for the preparation of the binders of Claims 1 to 4, characterized in that the acrylic monomers are copolymerized in the presence of the fluorine-containing copolymer(s) in solution or in emulsion in an organic solvent.

7. Self-crosslinkable varnishes and paints in organic or aqueous phase making use of the binders of Claims 1 to 4.

8. Substrates coated with a self-crosslinkable varnish or paint, as defined in Claim 7.
